Europäisches Patentamt

European Patent Office

Office européen des brevets

(11) Numéro de publication: **0 310 460 B1**

## FASCICULE DE BREVET EUROPEEN

(45) Date de publication de fascicule du brevet: **05.08.92**  (51) Int. Cl.⁵: **A21D 2/22**, A21D 8/04

(21) Numéro de dépôt: **88401634.6**

(22) Date de dépôt: **27.06.88**

(54) **Procédé de mise en oeuvre d'additifs et de levure de panification.**

(30) Priorité: **30.06.87 FR 8709216**

(43) Date de publication de la demande:
**05.04.89 Bulletin 89/14**

(45) Mention de la délivrance du brevet:
**05.08.92 Bulletin 92/32**

(84) Etats contractants désignés:
**AT BE CH DE ES FR GB GR IT LI LU NL SE**

(56) Documents cités:
**CH-A- 345 854**
**FR-A- 1 509 676**
**FR-A- 2 054 712**
**US-A- 4 642 237**

**CHEMICAL ABSTRACTS, vol. 99, no. 21, 21 novembre 1983, page 513, résumé no. 174491v, Columbus, Ohio, US; K. LORENZ: "Diacetyl tartaric acid esters of monoglyce-rides (DATEM) as emulsifiers in breads and buns" & BAKER'S DIG. 1983 (Sept./Oct.), 6-7,9**

(73) Titulaire: **Pelletier, René François Roger**
**3 Ouartier Beauregard**
**F-27530 Ezy-sur-Eure(FR)**

(72) Inventeur: **Pelletier, René François Roger**
**3 Ouartier Beauregard**
**F-27530 Ezy-sur-Eure(FR)**

(74) Mandataire: **Colas, Jean-Pierre et al**
**Cabinet de Boisse 37, avenue Franklin D. Roosevelt**
**F-75008 Paris(FR)**

## Description

La présente invention concerne la fabrication du pain et articles de viennoiserie cuits ou crus (surgelés) et a pour but d'améliorer la qualité de ceux-ci, notamment sous le rapport de la légèreté, tout en simplifiant la tâche du boulanger, en assurant une plus grande sécurité dans les dosages, et en permettant de mettre à profit les améliorations apportées par les laboratoires de recherche aux additifs servant à accroître l'activité des levures ou des levains dans la fermentation.

Le procédé classique de fabrication du pain consiste d'abord à placer dans le pétrin, en proportions convenables, de la farine, de l'eau, du sel, et de la levure de panification ou du levain.

Dans la fermentation qui se produit en présence de la levure, les enzymes contenues naturellement dans la farine jouent un rôle essentiel.

Le plus souvent, pour pallier la faiblesse des farines en enzymes, on ajoute dans le pétrin certains additifs enzymatiques que l'on appelle des "améliorants" et qui sont constitués souvent par un mélange pulvérulent d'amylase alpha et d'acide ascorbique auquel on ajoute quelquefois de la lécithine de soja fixée sur farine. On trouve dans le commerce des produits dénommés "Malton", "Rapidaze" et d'autres encore.

Les quantités de levure et d'additif sont variables selon la qualité de la farine, qui varie elle-même selon les années.

Le tout est pétri au pétrin mécanique, après quoi on façonne la pâte obtenue pour lui donner la forme que doit avoir le pain définitif.

Les pâtons résultant de ce façonnage sont placés pendant quelques heures dans une chambre de fermentation et finalement cuits au four.

Dans le cas où l'on veut recourir à la congélation les pâtons façonnés sont mis au congélateur à la fin du façonnage sans passer par la chambre de fermentation.

La fermentation et la cuisson seront effectuées plus tard après décongélation, quant on voudra utiliser les pâtons conservés.

L'utilisation des additifs dits "améliorants" n'est pas sans entraîner des difficultés. Il ne faut pas les oublier, mais il faut aussi les doser convenablement pour que la levure donne tout son pouvoir de dégagement gazeux et procure en particulier une mie légère et aérée.

Or l'emploi de ces "améliorants" est resté assez empirique. Il n'est pas rare de voir encore un boulanger utiliser de l'améliorant en poudre pour saupoudrer la levure ou la masse placée dans le pétrin, et procéder ainsi sans bien savoir ce qu'il fait.

On a proposé (Brevet U.S. 4 642 237) de placer des doses d'additifs à base d'amylase alpha, dans des enveloppes à paroi soluble dans l'eau, pour faciliter les manipulations à la boulangerie.

Mais le problème de l'emploi optimum de l'additif sans possibilités d'erreurs, d'oubli ou de mise en action prématurée en présence de levure, et avec l'obtention du meilleur rendement, n'a pas été considéré.

Ce problème est résolu selon l'invention, par le fait que l'additif est dosé d'avance, proportionnellement à la masse de levure avec laquelle il doit être employé, et que la dose contenue dans une ou plusieurs capsules étanches en matière destructible, est placée par le fabricant de levure, sur le bloc de levure en pâte ou dans la pochette contenant la dose de levure en poudre, avant la livraison de cette levure au boulanger. La dose de levure et la dose proportionnée d'additif forment ainsi un ensemble préparé avant l'usage.

Le coefficient de proportionnalité du poids d'additif au poids de levure est déterminé au laboratoire selon les qualités de la farine, qui dépendent elles-mêmes de la récolte et selon le mode de panification envisagé, panification directe ou panification avec congélation. Un exemple sera donné plus loin.

On peut noter que la mise en oeuvre d'une quantité d'additif proportionnelle à la quantité de levure utilisée, constitue une innovation par rapport au mode d'emploi le plus généralement répandu, dans lequel on s'efforçait de proportionner plus ou moins empiriquement, la quantité d'additif à la quantité de farine (ou d'eau utilisée, elle-même dosée à 60 % environ du poids de farine).

Cette innovation change fondamentalement les données actuelles de fabrication en ayant une répercussion importante sur les activités enzymatiques de la farine.

En effet, le fait de mettre une dose d'additif proportionnelle à la quantité de levure favorise l'équilibre de l'ensemble des réactions enzymatiques, qui se produisent entre la farine et la levure.

Lorsque le boulanger industriel ou l'artisan devra, pour des raisons diverses, par exemple, par suite de modifications de la qualité de la farine selon les années, modifier la dose de levure, la dose d'additif se trouvera modifiée automatiquement, en favorisant ainsi le maintien de l'équilibre enzymatique.

D'autre part, du fait que l'additif se trouvera consommé en même temps que la levure et que l'on a pris l'habitude de consommer celle-ci très rapidement après sa préparation, les problèmes d'altération de l'additif par la chaleur, dans un stockage plus ou moins prolongé, seront éliminés.

Dans le cas d'un bloc pâteux de levure, il est facile d'enfoncer la ou les capsules à la surface du bloc, par simple pression, avant d'empaqueter le bloc pour sa livraison au boulanger.

On fera varier le nombre de capsules proportionnellement à la dose de levure.

Dans le cas de levure en poudre, les paquets contenant la levure et les capsules peuvent être stockés pendant des mois sans altération.

La matière de la capsule étant dégradable, elle disparaîtra dès le début du pétrissage, tant par l'action mécanique du pétrissage que par dissolution dans l'eau ajoutée à la farine. L'additif se trouvera alors mélangé à la pâte pour activer la fermentation, mais il faut noter qu'avant le pétrissage, l'additif sera complètement séparé de la levure qui restera pure jusqu'au pétrissage.

On encapsulera de même l'acide ascorbique, à moins qu'il ne soit placé dans la même capsule que l'activateur si la nature de ce dernier le permet.

On a constaté que le pain obtenu présente d'excellentes qualités. En particulier sa mie est très légère et aérée.

A ce point de vue on peut encore avec avantage adjoindre à la levure, de préférence dans des capsules distinctes, des esters diacétyle tartrique (E472E) dont l'effet est de rendre le réseau de gluten moins perméable aux gaz et de contrarier ainsi l'échappement du $CO_2$ qui se dégage pendant la fermentation.

De plus le procédé se prête bien à la congélation. Celle-ci qui bloque la fermentation fait généralement souffrir la levure. On a constaté qu'avec le nouveau procédé de conditionnement, la fermentation repart très bien après la décongélation, ce qui est peut-être dû au fait que l'activant bien protégé par les capsules avant l'emploi, conserve plus longtemps toutes ses propriétés.

Par exemple, après six mois de congélation de pâtons crus, la pousse des pâtons décongelés s'est faite normalement et on a pu obtenir un pain de très bonne qualité.

A titre d'exemple, dans le cas de panification directe c'est-à-dire sans congélation, on adjoindra à un lot de 500 g de levure de panification :

une capsule contenant 3 à 4 g d'alpha-amylase de préférence fongique,

une capsule contenant 1 à 1,5 g d'acide ascorbique, et

une ou deux capsules contenant en tout 30 à 50 g d'ester diacétyle tartrique (E472E).

Ce lot que le boulanger emploiera tel quel conviendra pour traiter 25 Kgs de farine.

Dans le cas de panification avec congélation la dose de levure sera doublée et, automatiquement, la dose de capsules, c'est-à-dire d'additifs, le sera également.

## Revendications

1. Procédé de mise en oeuvre des levures et des additifs de panification, dans lequel l'additif est enfermé par doses dans des capsules en matière destructible, caractérisé par le fait qu'une dose d'additif proportionnée à une dose de levure, et enfermée de façon étanche, dans une ou plusieurs capsules en matière destructible, est, dans cet état, assemblée à la dose de levure avant l'emploi de celle-ci, de manière à former un tout équilibré qui est livré au boulanger et que celui-ci emploie tel quel.

2. Procédé selon la revendication 1, caractérisé en ce que l'additif à base d'amylase et de l'acide ascorbique sont enfermés par doses dans des capsules différentes contenant en tout, pour 500 g de levure en cas de panification directe, 3 à 4 g d'alpha-amylase et 1 g à 1,5 g d'acide ascorbique.

3. Procédé selon la revendication 1 ou 2, caractérisé en ce que l'on ajoute, pour 500 g de levure, une ou plusieurs capsules contenant en tout 30 g à 50 g d'ester diacétyle tartrique.

4. Procédé selon l'une des revendications 1 à 3, caractérisé en ce que les capsules sont enfoncées à la surface d'un bloc de levure en pâte, avant livraison de ce bloc au boulanger.

5. Procédé selon l'une des revendications 1 à 3, caractérisé en ce que les capsules sont mises dans le paquet contenant de la levure en poudre.

## Claims

1. Method of using yeasts and baking additives, in which doses of the additive are enclosed in capsules of destructible material, characterized in that a dose of additive proportional to a dose of yeast, and sealed in a leak-tight manner, in one or more capsules of destructible material is, in that state, combined with the dose of yeast before the use of the latter, in a manner such as to form a balanced unit which is supplied to the baker and which the latter will use as such.

2. Method according to Claim 1, characterized in that doses of the amylase-based additive and of ascorbic acid are enclosed in different capsules containing in all, for 500 g of yeast in the case of direct baking, 3 to 4 g of alpha-amylase and 1 g to 1.5 g of ascorbic acid.

3. Method according to Claim 1 or 2, characterized in that, for 500 g of yeast, one or more capsules containing a total of 30 g to 50 g of diacetyl tartrate are added.

4. Method according to one of Claims 1 to 3, characterized in that the capsules are buried in the surface of a block of pasty yeast, before delivery of this block to the baker.

5. Method according to one of Claims 1 to 3, characterized in that the capsules are placed in the packet containing powdered yeast.

**Patentansprüche**

1. Verfahren zur Bereitstellung von Backhefen und Backzusatzstoffen, bei welchem der Zusatzstoff dosenweise in Kapseln aus zerstörbarem Material eingeschlossen ist, dadurch gekennzeichnet, daß eine Dosis Zusatzstoff proportional zu einer Dosis Hefe ist, daß diese in einer oder mehreren Kapseln aus zerstörbarem Material dicht eingeschlossen und in diesem Zustand mit der Hefedosis vor Gebrauch jener zusammengestellt ist, so daß eine ausgewogene Einheit entsteht, welche dem Bäcker geliefert wird und die dieser, so wie sie ist, verwendet.

2. Verfahren nach Anspruch 1, dadurch gekennzeichnet, daß der Zusatzstoff auf Amylase- und Ascorbinsäurebasis dosenweise in verschiedenen Kapseln eingeschlossen ist, welche insgesamt für 500g Hefe bei direktem Backen 3 bis 4 g Alpha-Amylase und 1 bis 1,5 g Ascorbinsäure enthalten.

3. Verfahren nach Anspruch 1 oder 2, dadurch gekennzeichnet, daß man für 500g Hefe eine oder mehrere Kapseln mit insgesamt 30 bis 50 g weinsteinartigem Diacetyl-Ester zugibt.

4. Verfahren nach einem der Ansprüche 1 bis 3, dadurch gekennzeichnet, daß die Kapseln vor der Lieferung dieses Blocks an den Bäcker in die Oberfläche eines Hefeblocks im Teig eingedrückt werden.

5. Verfahren nach einem der Ansprüche 1 bis 3, dadurch gekennzeichnet, daß die Kapseln in das Paket mit Pulverhefe eingebracht werden.